# EUROPEAN PATENT APPLICATION

(11) **EP 4 632 590 A1**
(43) Date of publication of application: **15.10.2025**
(21) Application number: 25163552.0
(22) Date of filing: 13.03.2025
(51) Int. Cl.: G06F 13/40, G06F 13/42

(54) **SYSTEM AND METHOD FOR TRANSMITTING SIGNALS BETWEEN AT LEAST ONE CONTROLLER AND TARGET DEVICES ON MULTIPLE BUS SEGMENTS THROUGH A HUB DEVICE**

(30) Priority: 08.04.2024 CN 202410414310
(71) Applicant: NXP USA, Inc., Austin, TX 78735 (US)
(72) Inventor: Choudhary, Vishal Suhas, 5656 AG Eindhoven (NL); Mundargi, Vasanth, 5656 AG Eindhoven (NL); Yu, Junfei, 5656 AG Eindhoven (NL)
(74) Representative: Schmütz, Christian Klaus Johannes

(57) **Abstract**

A hub device and method for transmitting signals between at least one controller and target devices on multiple bus segments through the hub device uses a plurality of drivers coupled a plurality of target ports that are configured to be operably coupled to the bus segments. An input/output driver controller is coupled to the plurality of drivers to disable the drivers during a time window to allow the target devices to drive the bus segments and to enable the drivers to drive a value on all the bus segments at an end of the time window. A frame decoder is coupled to the input/output driver controller and at least one controller port to transmit data between the at least one controller port and the target ports via input/output driver controller.

## Description

### BACKGROUND

Improved Integrated interface (I3C) is an interface standard for communications between controllers and target devices, such as processors and memories, in a computing system using a serial bus, which uses open-drain as well as push-pull mode of communication. During address assignment, I3C protocol requires all the target devices to drive an I3C bus with their individual unique identification (ID) bits for address arbitration. In some hub scenarios, multiple bus segments are connected through the I3C hub, which requires address arbitration across these bus segments as defined in the I3C protocol. Thus, there is a need for a technique to implement address arbitration across multiple bus segments connected with the I3C hub. This arbitration scheme is also used during other phases of I3C transaction where multiple target devices or master is driving the I3C bus at the same time.

### SUMMARY

The present invention is set out in the appended set of claims.

According to a first aspect of the present disclosure, a hub device and method for transmitting signals between at least one controller and target devices on multiple bus segments through the hub device uses a plurality of drivers coupled a plurality of target ports that are configured to be connected to the bus segments. An input/output driver controller is coupled to the plurality of drivers to disable the drivers during a time window to allow the target devices to drive the bus segments and to enable the drivers to drive a value on all the bus segments at an end of the time window. A frame decoder is coupled to the input/output driver controller and at least one controller port to transmit data between the at least one controller port and the target ports via input/output driver controller.

In an embodiment, a hub device comprises a plurality of drivers coupled a plurality of target ports that are configured to be operably coupled to bus segments, a receiver coupled to the plurality of target ports, an input/output driver controller coupled to the plurality of drivers to enable and disable the drivers, the input/output driver controller also being coupled to the receiver to receive values on any of the bus segments via the target ports, a frame decoder coupled to the input/output driver controller and at least one controller port to transmit data between the at least one controller port and the target ports via input/output driver controller.

In an embodiment, the input/output driver controller is operable to collectively disable the drivers during a time window to allow target devices to drive the bus segments.

In an embodiment, the input/output driver controller is operable to collectively enable, after the time window, the drivers to drive the bus segments to a same value as a value driven by one of the target devices on one of the bus segments.

In an embodiment, the hub device further comprises a register for storage a value that defines a duration of the time window.

In an embodiment, the hub device further comprises a local clock generator that generates a local clock signal faster than a serial clock signal on the bus segments, wherein the time window is measured by the local clock signal.

In an embodiment, the input/output driver controller is operable to collectively enable the drivers at an end of the time window prior to a rising edge of the serial clock signal.

In an embodiment, the input/output driver controller is operable to collectively disable the drivers at a falling edge of the serial clock signal that coincides with a start of the time window.

In an embodiment, the receiver is operably coupled to each of the target ports.

In an embodiment, the each of the drivers includes an open-drain transistor.

In an embodiment, a method for transmitting signals between at least one controller and target devices on multiple bus segments through a hub device comprises disabling drivers of the hub device operably coupled to the bus segments during a time window to allow the target devices to drive the bus segments, at the end of the time window, reading a value on one of the bus segments driven by a particular target device among the target devices, in response to the value, enabling the drivers to drive the value on all the bus segments at an end of the time window, and after the drivers have been enabled, reading the value on the bus segments by at least some of the at least one controller and the target devices.

In an embodiment, the method further comprises using a value in a register to define a duration of the time window.

In an embodiment, the method further comprises using a local clock signal faster than a serial clock signal on the bus segments to measure the time window.

In an embodiment, enabling the drivers to drive the value on all the bus segments at the end of the time window is performed prior to a rising edge of the serial clock signal.

In an embodiment, disabling the drivers of a hub device includes disabling the drivers of the hub device at a falling edge of the serial clock signal that coincides with a start of the time window.

In an embodiment, disabling the drivers of the hub device includes disabling open-drain transistors of the hub device.

In an embodiment, disabling the drivers, reading the value on one of the bus segments, enabling the drivers to drive the value on all the bus segments and reading the value on the bus segments are part of an address arbitration process for the target devices.

In an embodiment, a hub device comprises a plurality of drivers coupled a plurality of target ports that are configured to be operably coupled to bus segments coupled to target devices, each of the drivers being coupled to a unique target port among the target ports, a receiver coupled to the plurality of target ports to read values on the bus segments via the target ports, an input/output driver controller coupled to the plurality of drivers to collectively enable and disable the drivers, the input/output driver controller also being coupled to the receiver to receive the values on the bus segments via the target ports, and a frame decoder coupled to the input/output driver controller and at least one controller via a controller port to transmit data between the at least one controller and the target devices via input/output driver controller.

In an embodiment, the input/output driver controller is operable to collectively disable the drivers during a time window to allow target devices to drive the bus segments.

In an embodiment, the input/output driver controller is operable to collectively enable, after the time window, the drivers to drive the bus segments to a same value as a value driven by one of the target devices on one of the bus segments.

In an embodiment, the hub device further comprises a local clock generator that generates a local clock signal faster than a serial clock signal on the bus segments, wherein the time window is measured by the local clock signal.

These and other aspects in accordance with embodiments will become apparent from the following detailed description, taken in conjunction with the accompanying drawings, illustrated by way of example of the principles of the embodiments.

### BRIEF DESCRIPTION OF THE DRAWINGS

Fig. 1 is a diagram of a serial bus system in accordance with an embodiment of the invention.
Fig. 2 illustrates an I3C dynamic address assignment process, which requires address arbitration, executed in the serial bus system in accordance with an embodiment of the invention.
Fig. 3 shows different devices connected to a serial data (SDA) line and a serial clock (SCL) line, which can be applied to embodiments of the invention.
Fig. 4 illustrates the mechanisms that can be used by controllers and target devices in the serial bus system to drive an SDA line of the bus in accordance with an embodiment of the invention.
Fig. 5 illustrates one naive way to use an open-drain transistor and a receiver for each of the serial bus segments.
Fig. 6 shows components of a hub device in the serial bus system in accordance with an embodiment of the invention.
Fig. 7 illustrates the state machine of a frame decoder of the hub device in accordance with an embodiment of the invention.
Fig. 8 illustrates the states of an input/output (IO) driver controller of the hub device during an I3C address arbitration phase in accordance with an embodiment of the invention.
Fig. 9 illustrates a high speed clock generator of the hub device in accordance with an embodiment of the invention.
Fig. 10 shows the components of a configuration register unit of the hub device in accordance with an embodiment of the invention.
Fig. 11 is a timing diagram for executing an I3C dynamic address assignment process in accordance with an embodiment of the invention.
Fig. 12 is a process flow diagram of a method for transmitting signals between at least one controller and target devices on multiple bus segments through a hub device in accordance with an embodiment of the invention.

Throughout the description, similar reference numbers may be used to identify similar elements.

### DETAILED DESCRIPTION

It will be readily understood that the components of the embodiments as generally described herein and illustrated in the appended Figs. could be arranged and designed in a wide variety of different configurations. Thus, the following more detailed description of various embodiments, as represented in the Figures, is not intended to limit the scope of the present disclosure, but is merely representative of various embodiments. While the various aspects of the embodiments are presented in drawings, the drawings are not necessarily drawn to scale unless specifically indicated.

The described embodiments are to be considered in all respects only as illustrative and not restrictive. The scope of the embodiments is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

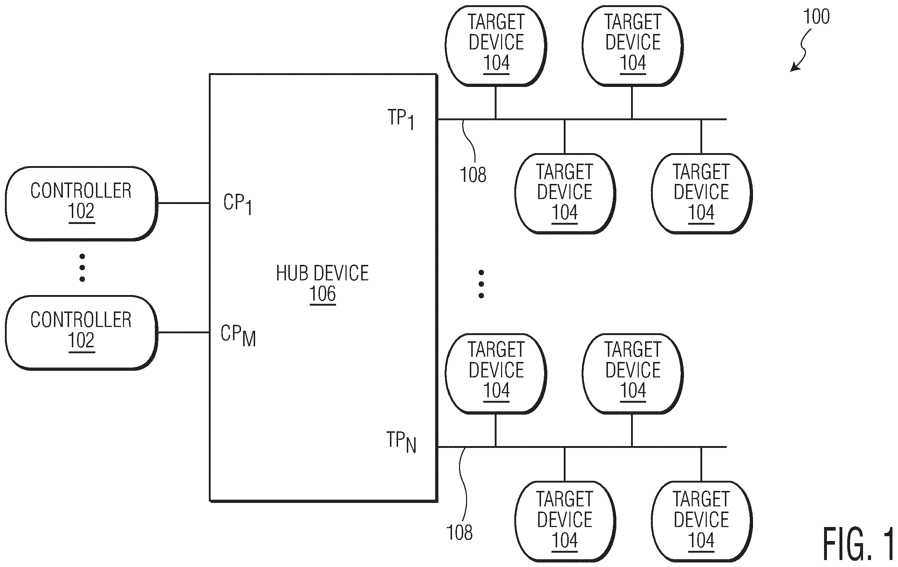

Turning now to Fig. 1, a serial bus system 100 in accordance with an embodiment of the invention is shown. The serial bus system 100 includes multiple controllers 102 and multiple target devices 104 that are operably coupled (i.e., connected directly or indirectly) to a hub device 106, which allows communications between the controllers and the target devices through serial bus segments 108, which can be viewed as being parts of a serial bus. As an example, the controllers 102 may be processors, and the target devices 104 may be computer peripheral devices commonly found in a server, such as double date rate (DDR) memory devices. In the illustrated embodiment, the serial bus system 100 is designed to conform to Improved Integrated interface (I3C) protocol. Thus, the controllers 102 are I3C controllers and the hub device 106 is an I3C hub device. Under I3C protocol, all target devices are required to drive the bus with their individual unique identification (ID) bits for address arbitration. As described in detail below, the serial bus system 100 uses an efficient solution to implement address arbitration across the multiple bus segments 108 connected to the hub device 106. Although the serial bus system 100 is described with respect to the I3C protocol, the address arbitration described herein may be applied to other bus protocols, which have similar requirements as the I3C protocol.

As shown in Fig. 1, the hub device 106 includes controller ports CP₁... CP_{M}, which allow the controllers 102 to be operably coupled to the hub device. The hub device 106 also includes target ports TP₁...TP_{N}, which allow the target devices 104 to be operably coupled to the hub device via the serial bus segments 108. Each serial bus segment is connected to one of the target ports TP₁...TP_{N} of the hub device 106. Thus, the target devices 104 operably coupled to a particular serial bus segment are operably coupled to the hub device through that particular serial bus segment. Using the hub device 106, each controller 102 can communicate to all the target devices 104 operably coupled to the different serial bus segments 108. During address arbitration, a target device 104 on any of the serial bus segments 108 can take control of the bus, which means that the serial bus segments must be logically connected. However, the serial bus segments 108 need to be electrically isolated from the controllers 102.

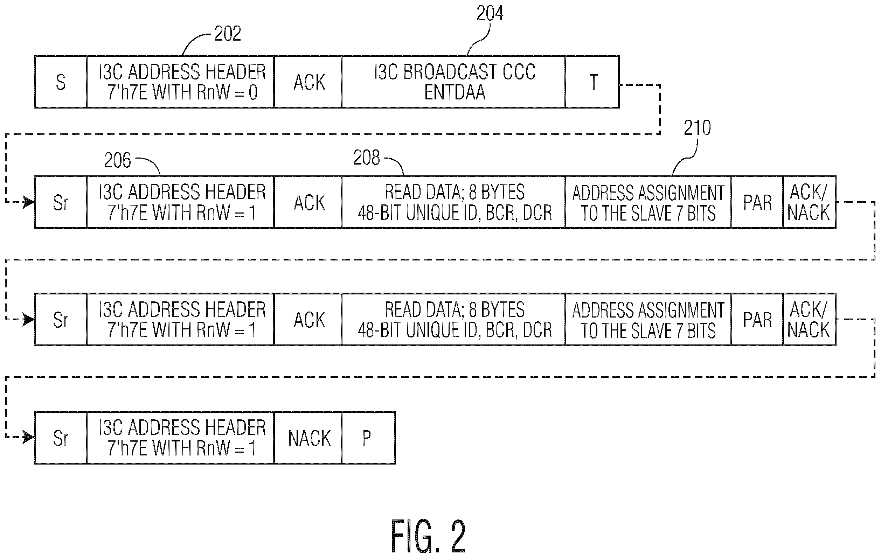

Turning now to Fig. 2, an I3C dynamic address assignment process, which requires address arbitration, executed in the serial bus system 100 in accordance with an embodiment of the invention is illustrated. The I3C dynamic address assignment process begins when a common command code (CCC) 202 is sent to all the target devices 104 on the different serial bus segments 108 from one of the controllers 102 after a start or repeated start condition. After acknowledge (ACK) signals from the target devices 104 have been received, a broadcast enter dynamic address assignment (ENTDAA) CCC 204 is sent to all the target devices 104, which is followed by a transition bit (parity bit for CCC).

Next, after a repeated start condition, a broadcast address header 206 is sent to the target devices 104. In response, all the target devices acknowledge the address header and start sending their PID, followed by bus characteristic register (BCR) value and device characteristic register (DCR) value over the bus simultaneously. Arbitration happens over this period of 64 bit transmission and eventually there will be a one winner who will be able to transmit all 64 bits successfully over the bus. A dynamic address 210 is then sent to the winning target device from the controller, followed by a parity bit. The address assignment for the winning target device is complete when the address assignment is acknowledged or not acknowledged by the winning target. This process is repeated until each of the target devices has been assigned with an address, i.e., when a broadcast address message 206 is not acknowledged. A stop condition is then provided by the controller, which ends the dynamic address assignment process.

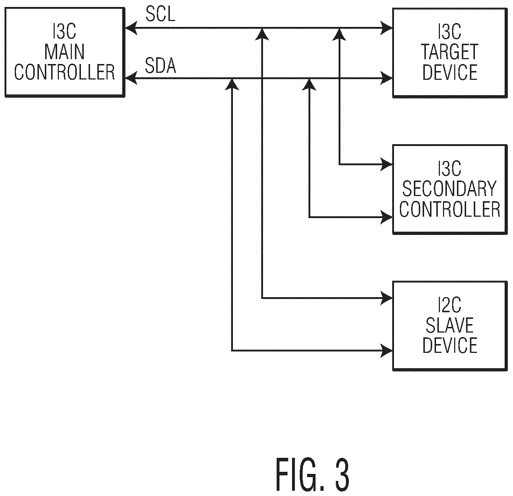

Each of the serial bus segments 108 of the serial bus system 100 comprises a serial data (SDA) line and a serial clock (SCL) line, which are electrically connected to the controllers and the target devices. In the embodiments in which the serial bus system 100 is an I3C serial bus system, the controllers 102 may be I3C masters and the target devices 104 may be I3C slave devices, I2C slave devices and/or I3C secondary master devices. Thus, these different devices are all electrically connected to the SDA and SCL lines, as illustrated in Fig. 3, which shows different devices connected to the same SDA and SCL lines.

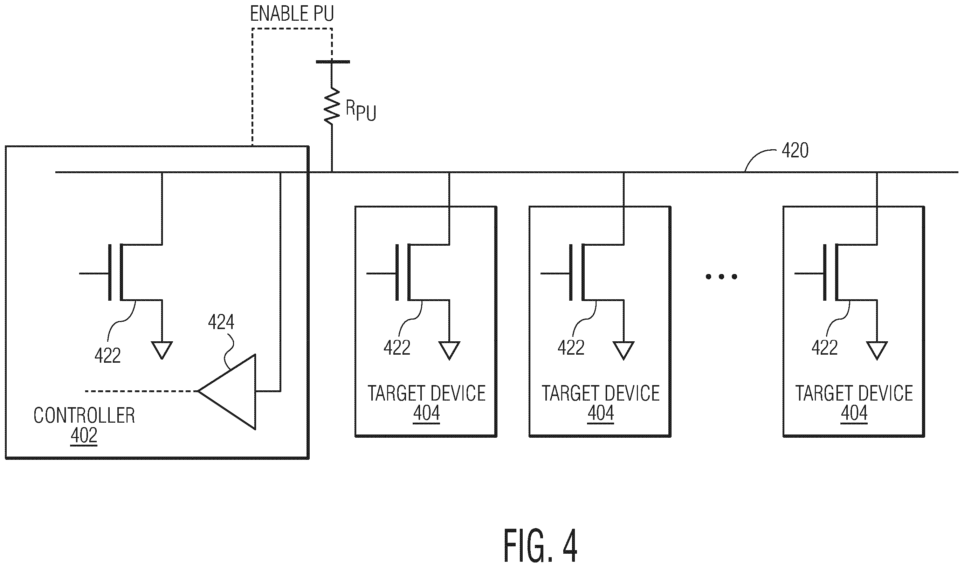

In order to use the SDA line of the serial bus segments 108, the controllers 102 and the target devices 104 need to be able to drive the line high and low in open-drain or push-pull mode, as needed. Fig. 4 illustrates the mechanisms that can be used by the controllers 102 and target devices 104 in the serial bus system 100 to drive an SDA line 420 of the bus, which can be any of the serial bus segments 108, in accordance with an embodiment of the invention. As shown in Fig. 4, a controller 402 and a number of target devices 404 are connected to the SDA line 420 of the bus. In order to be able to pull up (PU) the SDA line 420 to high, a pull-up resistor R_{PU} which is controlled or enabled by the controller 402, is connected to the bus line 420. Each of the controller 402 and target devices 404 includes an open-drain transistor 422, i.e., a transistor connected to ground. These transistors may be metal-oxide-semiconductor (MOS) transistors or other types of transistors. The controller also includes a receiver 424, which may be an amplifier as illustrated, that is also connected to the SDA line 420 to receive signals from the target devices 404. It is noted here that the SCL line (not shown) of the bus is only driven by the controller 402 to provide a serial clock signal to the target devices 404.

I3C protocol uses open-drain mode for sending the address after a START condition. Open-drain mode is required to enable arbitration during this phase. Typically, arbitration is needed when any of the target devices on the bus wants to trigger an in-band interrupt IBI for the controller. After the ACK cycle, controller or the target devices switch to push-pull mode for data transfer. Push-pull mode allows for higher data rate during the data transfer phase.

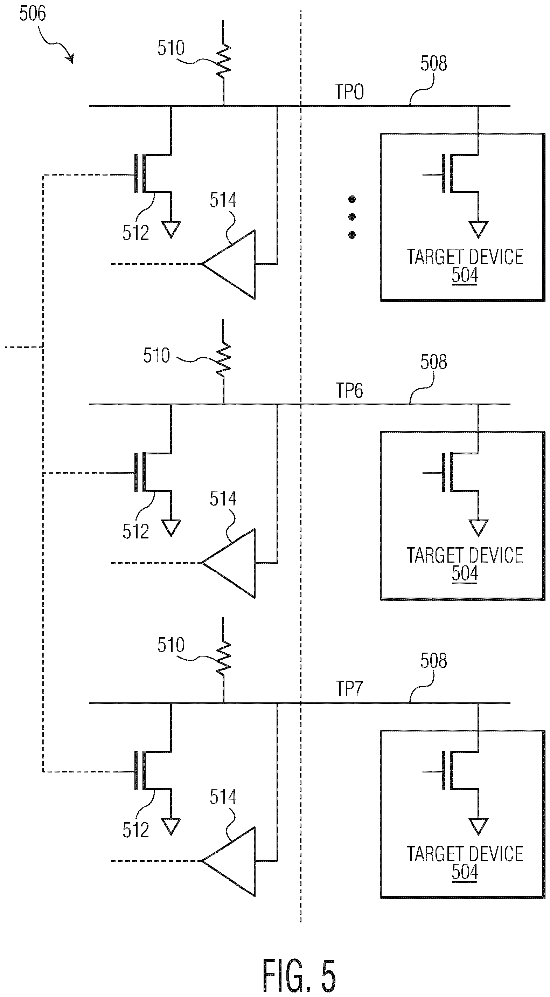

As noted above, when there are multiple serial bus segments, such as the serial bus segments 108 in the serial bus system 100, the multiple bus segments must be electrically isolated, but logically connected. That is, data traffic on each serial bus segment must be communicated to the other serial bus segments so that the different serial bus segments appear to be a single bus, which is facilitated by the hub device 106. One naive way to achieve this goal is to use an open-drain transistor and a receiver for each of the serial bus segments, where the open-drain transistors are controlled by the same driving signal, which is illustrated in Fig. 5.

In Fig. 5, a number of serial bus segments 508 are connected to a hub device 506 via target ports TP0...TP7, where a target device 504 is connected to each of the serial bus segments. In the hub device 506, a pull-up resistor 510, an open-drain transistor 512 and a receiver 514 are connected to each of the serial bus segments 508. Thus, the serial bus segments 508 are collectively driven by the open-drain transistors 512 of the hub device 506. Additionally, data on one of the serial bus segments 508 are replicated in the other bus segments using the open-drain transistors 512. However, when in operation, the open-drain transistor 512 and the receiver 514 for one serial bus segment 508 can form a latch, which may cause errors, i.e., wrong data or state, on the serial bus segment. Thus, a hub device for serial bus segments needs to control the driving and receiving devices in a manner that avoids forming a latch. In addition, there may be delays between a controller and target devices via the hub device, which needs to be addressed by the hub device.

Thus, in some embodiments, the challenges of the hub device 106 includes (1) electrically combining the I3C serial bus segments 108 on all the target ports; (2) mimicking the open-drain bus topology between the controllers 102 and the target devices 104; (3) decoding Inter-Integrated interface (I2C) and/or I3C transaction frames on the fly and control input/output (IO) mode appropriately; (4) taking care of all the potential delays between the controllers and the target devices via the hub device; and (5) controlling IO driver and receiver in a manner that avoids forming a latch.

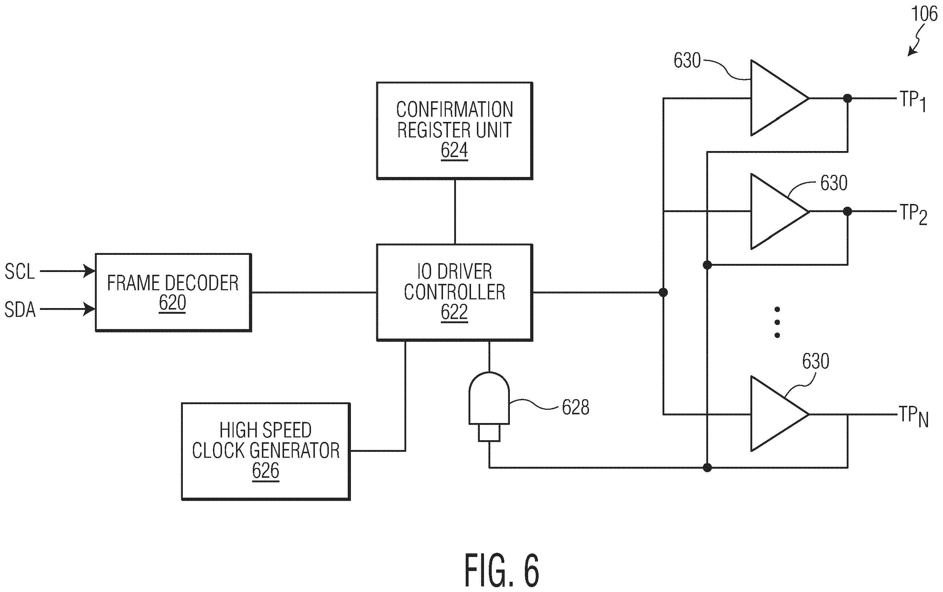

Turning now to Fig. 6, components of the hub device 106 in accordance with an embodiment of the invention are illustrated. As shown in Fig. 6, the hub device 106 includes a frame decoder 620, an IO driver controller 622, a configuration register unit 624, a local high speed clock generator 626, a receiver 628 and a number of IO drivers 630. As described below, these components of the hub device 106 operate to address at least some of the above-described challenges.

The frame decoder 620 is connected to the controllers 102 via SDA and SCL lines, which are connected to the controller ports CP₁...CP_{M} (not shown in Fig. 6). The frame decoder 620 operates to execute various operations to enable communications between the controllers 102 and the target devices 104, including operations for a dynamic address assignment process. The frame decoder 620 is further described using states of the frame decoder.

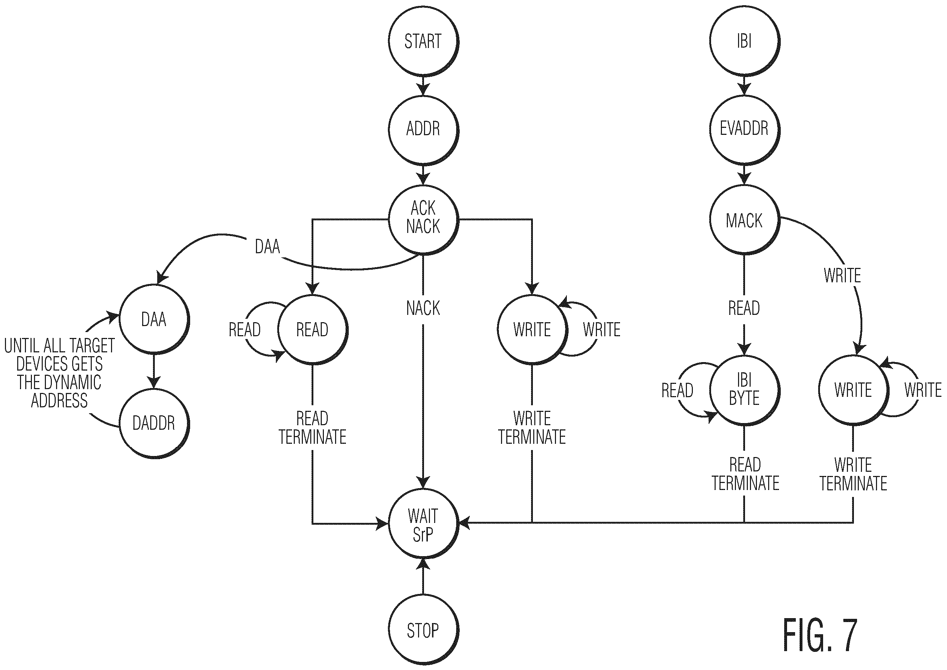

Fig. 7 illustrates the state machine of the frame decoder 620 in accordance with an embodiment of the invention, which works on the I2C/I3C SCL clock. As shown in Fig. 7, the states of the frame decoder include the START state (I2C/I3C frame start condition), which transitions to the ADDR state (I2C/I3C address phrase). Next, the frame decoder transitions to the ACK NACK state (acknowledge cycle from the target device). If there is no acknowledgement (NACK), then the frame decoder transitions to the WAIT SrP state (idle state waiting for START or STOP). However, if there is acknowledgement (ACK), then the frame decoder transitions to the READ state (I2C/I3C read phrase) or the WRITE state (I2C/I3C write phase), and then to the WAIT SrP state after read/write terminates.

The frame decoder 620 can also transition to the DAA state (dynamic address assignment phase), which is triggered when ENTDAA CCC is received by the hub device. In this phase, an iterative loop of a dynamic address assignment process is executed until all the target devices get their dynamic addresses. Thus, the frame decoder transitions to the DADDR state (dynamic address assigned to the target device) repeatedly until all the target devices get their dynamic addresses. The frame decoder then transitions to the WAIT SrP state when there is no acknowledgement (NACK) to a dynamic address assignment message.

The states of the frame decoder 620 also include the IBI state (target device triggered in-band-interrupt state), which transitions to the EVADDR state (address phase triggered by the target device events (IBI)). Next, the frame decoder transitions to the MACK state (the controller/master acknowledge phase). The frame decoder then transitions to the IBI BYTE state (IBI data byte from the target device) or the WRITE state. After read/write terminates, the frame decoder then transitions to the WAIT SrP state.

Turning back to Fig. 6, the IO driver controller 622 operates to drive the IO drivers 630, which are connected to the target ports TP₁...TP_{N} of the hub device 106, to control the data on the serial bus segments 108 using information stored in the configuration register unit 624 and using the local high speed clock signal from the high speed clock generator 626. The IO driver controller 622 also receives information on the serial bus segments 108 via the target ports TP₁...TP_{N} from the receiver 628. The receiver 628 operates to detect the data or value on any of the serial bus segments 108, which may be used to drive all the serial bus segments to the same value during a dynamic address assignment process. In a particular implementation, the receiver 628 is an AND gate that receives input from all the serial bus segments 108.

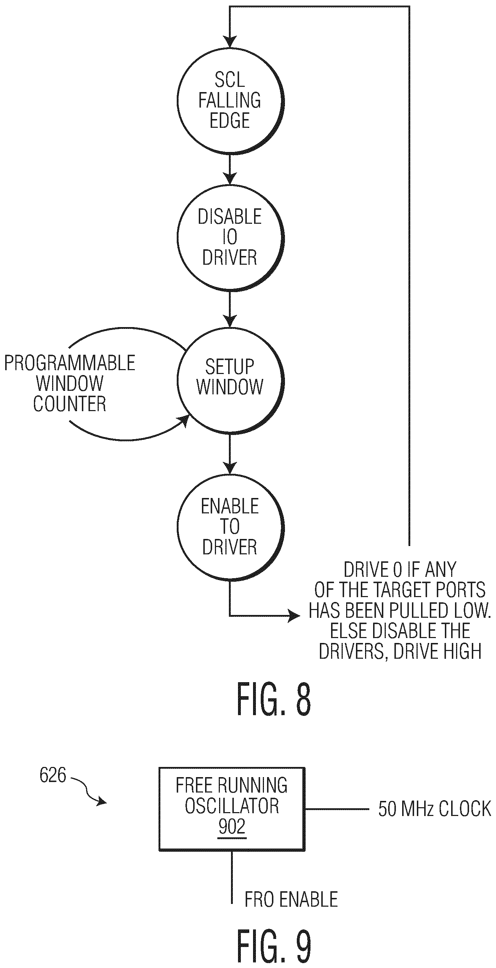

Fig. 8 illustrates the states of the IO driver controller 622 during an I3C address arbitration phase in accordance with an embodiment of the invention. As shown in Fig. 8, the states of the IO driver controller 622 include the SCL FALLING EDGE state (SCL falling edge detection), which transitions to the DISABLE IO DRIVER state in which the IO drivers 630 on all the target ports TP₁...TP_{N} are disabled, allowing the target devices 104 on the respective target ports to drive the serial bus segment 108. Next, the IO driver controller transitions to the SETUP WINDOW state, at which the IO driver controller waits for the setup window count using the high-speed clock signal from the high speed clock generator 626. This setup window count defines a length of time or a time window, and is configurable using the configuration register unit 624. The IO driver controller then transitions to the ENABLE IO DRIVER state at the end of the setup window period. If any of the target ports has been pulled low by one of the serial bus segments 108, the IO driver controller drives all the IO drivers to produce 0 on all the serial bus segments. However, if none of the target ports has been pulled low, then the IO drivers remain disabled, pulling all the serial bus segments to HIGH (i.e., disable each open-drain driver with the pull-up resistor on all the target ports). The IO driver controller then transitions back to the SCL FALLING EDGE state.

Fig. 9 illustrates the high speed clock generator 626 of the hub device 106 in accordance with an embodiment of the invention. As shown in Fig. 9, in the illustrated embodiment, the high speed clock generator 626 is a free running oscillator (FRO) 902 that generates a high speed clock signal, e.g., a 50MHz clock signal, which is used by the IO driver controller 622. The FRO 902 is enabled by an FRO enable signal, which is from the IO driver controller when the high speed clock signal is needed.

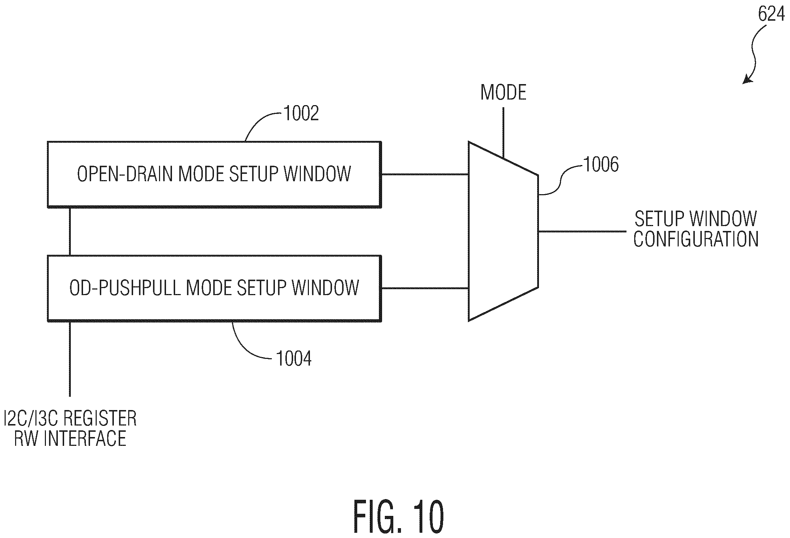

Fig. 10 shows the components of the configuration register unit 624 of the hub device 106 in accordance with an embodiment of the invention. As shown in Fig. 10, the configuration register unit 624 includes registers 1002 and 1004 and a multiplexer 1006. The register 1002 is used to store the value for the open-drain mode setup window, which defines the width or duration of the open-drain (OD) mode setup window used by the IO driver controller 722. The register 1104 is used to store the value for the OD push-pull mode setup window, which defines the width or duration of the OD push-pull mode setup window used by the IO driver controller 722. These registers may be programmed with the desired values for the setup windows using an I2C/I3C register read/write interface. The programmed values can be selectively read out of the registers using the multiplexer 1106, which is controlled by a mode selection signal from the IO driver controller.

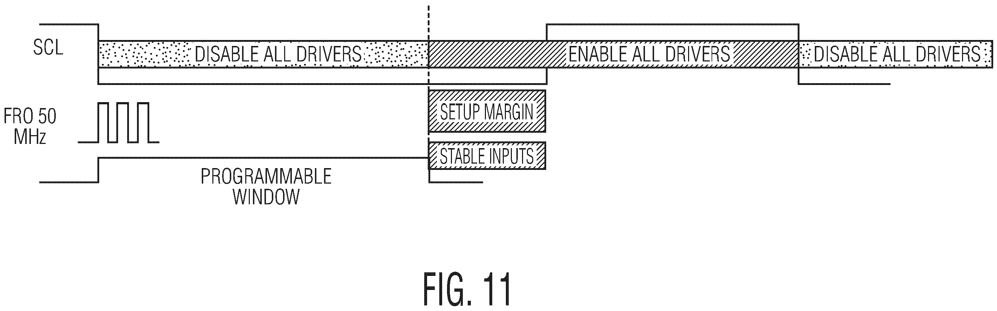

Using the high speed clock signal and the setup window values, the IO driver controller can selectively enable and disable the IO drivers 730 to execute an I3C dynamic address assignment process. Fig. 11 is a timing diagram for executing the I3C dynamic address assignment process in accordance with an embodiment of the invention. As illustrates in Fig. 11, on the falling edge of the serial clock signal on the SCL bus line, all the IO drivers 630 are disabled by the IO driver controller 622, allowing the target devices 104 to drive any of the serial bus segments 108. This disabled driver state is maintained until the end of a programmable window, which is defined by the value stored in the register 1002. This window period is timed or measured using the local high speed clock from the high speed clock generator 626. At the end of the programmable window, data or value on any of the serial bus segments 108 is detected or read by the IO driver controller 622 via the receiver 628. Depending on the detected data, all the IO drivers 630 are enabled by the IO driver controller 622 to reflect the detected data so that this data can be read out by all the devices. The detecting and driving of the serial bus segments 108 are executed within a setup margin period, which is the time between the end of the programmable window and the next rising edge of the serial clock signal on the SCL line, when the data on the serial bus segments 108 are read by all the devices, which includes the controllers 102 and the target devices 104. This cycle is repeated at the next falling edge of the serial clock on the SCL bus line.

As an example, let's assume that a particular target device 104 on one of the serial bus segments 108 drives that serial bus segment to "0" during the programmable window. Then, at the end of the programmable window, all the IO drivers 630 will be enabled by the IO driver controller 622 so that "0" is present on all the serial bus segments 108 during the setup margin period. Then, at the rising edge of the serial SCL clock, "0" will be read out from the serial bus segments 108 by all the target devices coupled to the serial bus segments. Thus, all the target devices 104 would know that the particular target device is the winner of the current address arbitration cycle. In this fashion, all the target devices can be assigned an address one at a time.

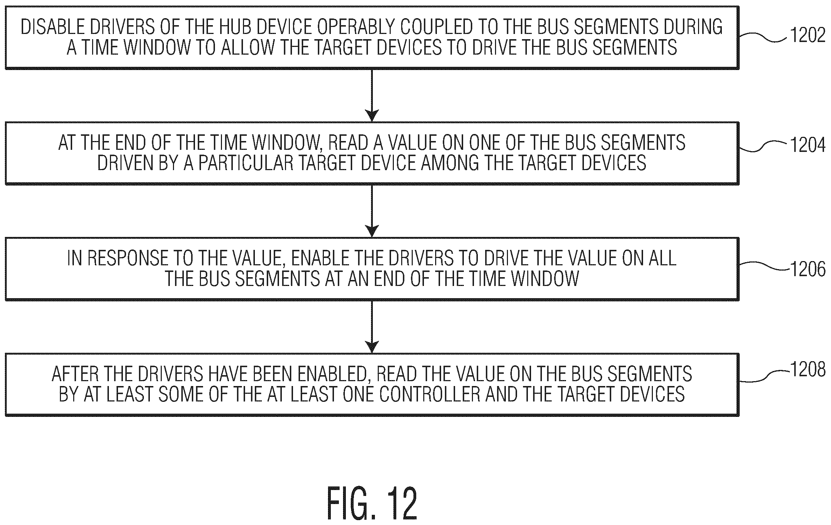

A method for transmitting signals between at least one controller and target devices on multiple bus segments through a hub device, such as the hub device 106, in accordance with an embodiment of the invention is described with reference to a process flow diagram of Fig. 12. At block 1202, drivers of the hub device operably coupled to the bus segments are disabled during a time window to allow the target devices to drive the bus segments. At block 1204, at the end of the time window, a value on one of the bus segments driven by a particular target device among the target devices is read. At block 1206, in response to the value, the drivers are enabled to drive the value on all the bus segments at an end of the time window. At block 1208, after the drivers have been enabled, the value on the bus segments is read by at least some of the at least one controller and the target devices.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It can also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments that use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A hub device comprising:
a plurality of drivers coupled a plurality of target ports that are configured to be operably coupled to bus segments;
a receiver coupled to the plurality of target ports;
an input/output driver controller coupled to the plurality of drivers to enable and disable the drivers, the input/output driver controller also being coupled to the receiver to receive values on any of the bus segments via the target ports; and
a frame decoder coupled to the input/output driver controller and at least one controller port to transmit data between the at least one controller port and the target ports via input/output driver controller.

2. The hub device of claim 1, wherein the input/output driver controller is operable to collectively disable the drivers during a time window to allow target devices to drive the bus segments.

3. The hub device of claim 1 or 2, wherein the input/output driver controller is operable to collectively enable, after the time window, the drivers to drive the bus segments to a same value as a value driven by one of the target devices on one of the bus segments.

4. The hub device of claim 2 or 3, further comprising a register for storage a value that defines a duration of the time window.

5. The hub device of any of claims 2 to 4, further comprising a local clock generator that generates a local clock signal faster than a serial clock signal on the bus segments, wherein the time window is measured by the local clock signal.

6. The hub device of any of claims 2 to 5, wherein the input/output driver controller is operable to collectively enable the drivers at an end of the time window prior to a rising edge of the serial clock signal.

7. The hub device of any of claims 2 to 6, wherein the input/output driver controller is operable to collectively disable the drivers at a falling edge of the serial clock signal that coincides with a start of the time window.

8. The hub device of any of the preceding claims, wherein the receiver is operably coupled to each of the target ports.

9. The hub device of any of the preceding claims, wherein each of the drivers includes an open-drain transistor.

10. A method for transmitting signals between at least one controller and target devices on multiple bus segments through a hub device, the method comprising:
disabling drivers of the hub device operably coupled to the bus segments during a time window to allow the target devices to drive the bus segments;
at the end of the time window, reading a value on one of the bus segments driven by a particular target device among the target devices;
in response to the value, enabling the drivers to drive the value on all the bus segments at an end of the time window; and
after the drivers have been enabled, reading the value on the bus segments by at least some of the at least one controller and the target devices.

11. The method of claim 10, further comprising using a value in a register to define a duration of the time window.

12. The method of claim 10 or 11, further comprising using a local clock signal faster than a serial clock signal on the bus segments to measure the time window.

13. The method of claim 12, wherein enabling the drivers to drive the value on all the bus segments at the end of the time window is performed prior to a rising edge of the serial clock signal.

14. The method of claim 12 or 13, wherein disabling the drivers of a hub device includes disabling the drivers of the hub device at a falling edge of the serial clock signal that coincides with a start of the time window.

15. The method of any of the claims 10 to 14, wherein disabling the drivers of the hub device includes disabling open-drain transistors of the hub device.
